Europäisches Patentamt

European Patent Office

Office européen des brevets

(19)

(11) Numéro de publication: **0 074 911**
**B1**

(12) # FASCICULE DE BREVET EUROPEEN

(45) Date de publication du fascicule du brevet:
**14.05.86**

(51) Int. Cl.⁴: **A 47 J 43/06**, B 02 C 18/30

(21) Numéro de dépôt: **82401690.1**

(22) Date de dépôt: **17.09.82**

(54) **Appareil pour l'extrusion de pâtes alimentaires.**

(30) Priorité: **18.09.81 FR 8117620**

(43) Date de publication de la demande:
**23.03.83 Bulletin 83/12**

(45) Mention de la délivrance du brevet:
**14.05.86 Bulletin 86/20**

(84) Etats contractants désignés:
**AT BE CH DE GB IT LI LU NL SE**

(56) Documents cités:
**FR - A - 2 147 361**
**US - A - 2 006 318**
**US - A - 2 727 395**
**US - A - 3 014 515**
**US - A - 3 108 533**
**US - A - 3 215 180**
**US - A - 3 951 351**
**US - A - 4 138 066**

, (73) Titulaire: **ROBOT-COUPE S.A., Zone Industrielle des Alouettes, F-71300 Montceau-les-Mines (FR)**

(72) Inventeur: **Coggiola, Marcel Eugène, 32 Avenue du General de Gaulle, F-94170 le Perreux (FR)**

(74) Mandataire: **Viard, Jean, Cabinet VIARD 28 bis, avenue Mozart, F-75016 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention a pour objet un appareil destiné en particulier, mais non exclusivement, à l'extrusion de pâtes alimentaires telles que spaghetti, tagliatelles, macaronis, etc. à partir d'une masse de pâte spécialement préparée. Plus particulièrement, la présente invention concerne un appareil ménager de petite capacité.

Des appareils de ce type sont connus, notamment par le brevet US-A-3 014 515, et comprennent essentiellement une vis sans fin mue par un moteur électrique inclus dans un carter et tournant à l'intérieur d'un cylindre à l'une des extrémités duquel débouche une trémie d'alimentation, l'autre extrémité étant obturée par une grille percée de trous de diamètre déterminé. La vis d'Archimède assure d'une part le transport de la pâte introduite par la trémie et, d'autre part, la pression nécessaire au passage de la pâte à travers la grille. De tels dispositifs sont également utilisés pour hacher de la viande.

On connait par ailleurs des appareils de cuisine sous le nom de robots de cuisine qui remplissent une multiplicité de fonctions telles que le hachage, l'éminçage, le râpage, etc. Un tel appareil est décrit dans le brevet FR-A- 2 147 361. Cet appareil se compose d'un socle renfermant un moteur électrique sur lequel est assujetti une cuve amovible, le moteur ne pouvant être mis en marche que lorsque la cuve est convenablement montée sur le socle et lorsqu'elle est fermée par un couvercle. Le fonctionnement de cet appareil est ainsi très sûr. Toutefois, compte tenu des divers travaux à accomplir, le moteur électrique tourne à environ 1500 tours/minute alors que dans le cas des appareils d'extrusion des pâtes alimentaires, la vitesse de rotation de la vis doit être d'environ 30 tours/mn.

La présente invention a pour objet un appareil qui puisse être monté sur le sockle d'un robot de cuisine du type décrit dans le brevet précité et présente la même sécurité de fonctionnement contre tout contact de la main avec l'outil lorsque celui-ci est en rotation.

Selon la présente invention, l'appareil pour l'extrusion de pâtes alimentaires destiné à être monté d'une manière amovible sur le socle d'un robot de cuisine incluant à l'intérieur du socle un moteur électrique et un circuit d'alimentation du moteur, comprenant une vis sans fin tournant à l'intérieur d'une cage cylindrique horizontale dans laquelle débouche une trémie d'entrée de la pâte terminée à l'extrémité opposée par une grille perforée d'extrusion, le circuit d'alimentation du moteur comprenant un interrupteur de sécurité actionné par le montage de la cage cylindrique, est caractérisé en ce qu'il comprend une embase s'adaptant d'une manière amovible sur le socle et supportant le carter contenant une pignonerie de renvoi et de réduction de vitesse, l'axe de la vis sans fin étant solidaire du pignon, un poussoir coulissant verticalement au dessus d'un interrupteur disposé à l'intérieur du socle et monté en série dans le circuit d'alimentation du moteur, coulissant dans une glissière et coopérant avec un mécanisme de verrouillage libérant le poussoir lorsque la cage cylindrique est montée sur le carter.

D'autres caractéristiques et avantages de l'invention apparaîtront au cours de la description qui va suivre de modes particuliers de réalisation, donnés uniquement à titre d'exemples non limitatifs en regard des figures qui représentent:

– la Fig. 1, un mode de réalisation de la sécurité, le cylindre et la vis ayant été démontés;
– la Fig. 2, une vue en perspective de l'appareil en état de fonctionnement;
– les Figs 3 à 6, des détails du mécanisme du mode de réalisation.

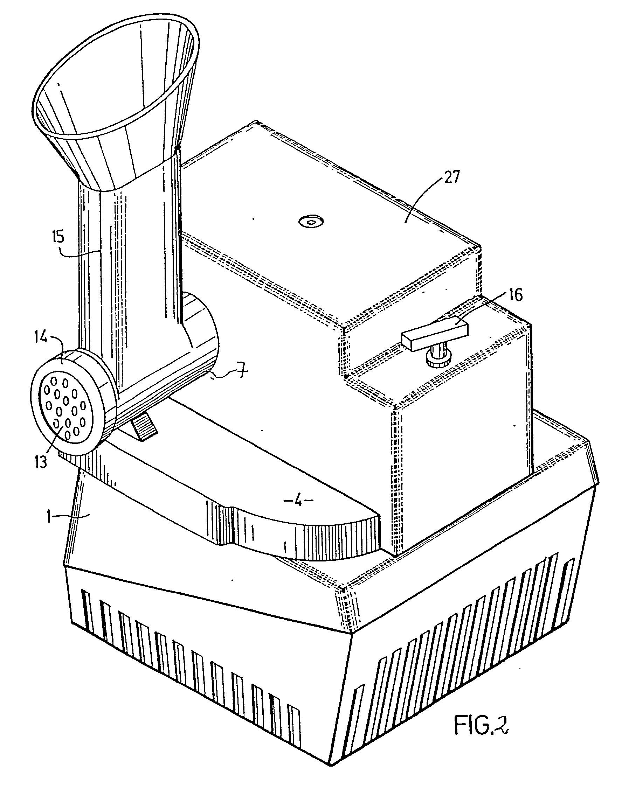

Sur la Fig. 2, on voit que l'appareil se compose d'un socle 1, renfermant un moteur électrique (non représenté) du type décrit dans FR-A-2 147 361 et dont la surface supérieure 2 présente un bossage cylindrique sur lequel vient s'acrocher l'embase 4 par l'intermédiaire de taquets coopérant avec des rainures à baïonnettes prévues dans l'embase 4 de l'appareil d'extrusion qui est ainsi monté d'une manière amovible sur le socle 1. L'embase 4 supporte un carter 5 destiné à contenir la pignonerie et à permettre le montage amovible tant de la vis sans fin que de la cage cylindrique 7.

L'arbre moteur (non représenté) fait saillie à partir du centre du socle et comporte un méplat. Un fourreau vient se glisser sur l'arbre moteur et, par sa surface externe taillée en six pans entraîne une vis sans fin qui engrène avec un pignon qui est tourilloné dans le carter. La vis et le pignon sont calculés pour réaliser une réduction de vitesse de rotation de 1500 t/mn. à 30 t/mn.

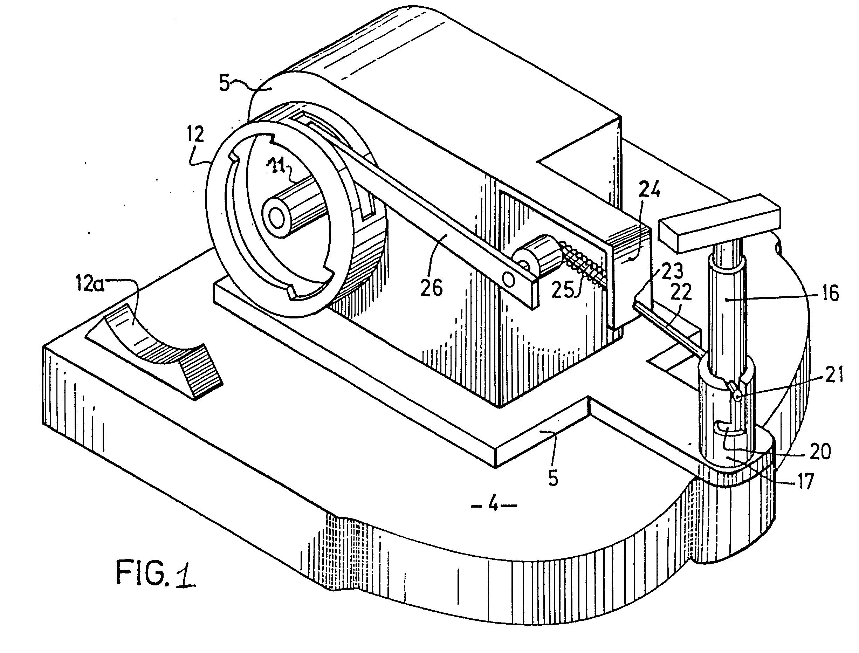

Comme cela apparaît sur la Fig. 1, le pignon 10 est solidaire d'un axe 11 creux qui fait saillie à partir du carter et dont l'intérieur a une section hexagonale destinée à permettre l'introduction et l'entraînement de l'extrémité de la vis 6. Le bout de l'axe 11 est entouré par une couronne 12 fixe sur le carter 5 et qui présente des encoches conformées en baïonette à l'intérieur desquelles pénètrent des tétons prévus à l'extrémité arrière du cylindre 7 de manière à maintenir le cylindre 7 sur le carter 5. Le cylindre 7 prend par ailleurs appui sur un berceau 12a formé sur l'embase 4.

Sur la Fig. 2, on voit que l'extrémité avant de la cage cylindrique 7 est fermée par une grille B qui est également amovible et est fixée sur le cylindre 7 par une bague filetée 14. Bien entendu, cette grille présente une multiplicité d'orifices dont la disposition et le diamètre ou plus généralement les dimensions varient d'une grille à l'autre, les dimensions de chaque orifice permettant d'obtenir des pâtes de formes différentes. La cage cylindrique 7 est surmontée par une trémie 15 ou goulotte d'alimentation servant à l'introduction de la pâte dans le cylindre.

D'une manière générale, la mise en œuvre de l'appareil est la suivante: dans un premier temps l'embase 4 est disposée sur le socle 1 ce qui provoque l'accouplement de la vis avec l'arbre de sortie du moteur. Puis, la vis 6 est introduite dans la cavité de l'axe 11 par son extrémité arrière. On notera que c'est à ce moment que le moteur ne doit en aucun cas pouvoir être alimenté. Enfin, le cylindre 7 est mis en place et une grille 13 est vissée à l'extrémité avant dudit cylindre.

Bien entendu, la difficulté qui est surmontée par l'invention provient de ce que les différents éléments sont démontables. Cette particularité découle toutefois de ce que l'appareil doit être facilement nettoyé après chaque usage.

Sans modifier la position de l'interrupteur 18, il est possible, comme représenté sur les Figs 1 et 2, d'obtenir l'extrusion des pâtes sur le coté de l'appareil. Comme précédemment, le poussoir 16 est monté coulissant dans une glissière verticale 17 qui est fixée sur le carter 5. Lorsque l'embase 4 est convenablement positionnée sur le socle 1, le poussoir se trouve à l'aplomb de l'interrupteur 18. Sa descente est toutefois bloquée par une tige 22 mobile latéralement, guidée par l'orifice 23 d'une équerre 24 et ramenée en position arrière par un ressort de rappel 25. Le déplacement vers l'avant de ladite tige, libérant le poussoir est sous la dépendance d'un levier 26 qui pénètre dans la fente 27 prévue dans la couronne 12 et dont l'extrémité est repoussée par un bossage formé sur la partie du cylindre 7 qui pénètre à l'intérieur de la couronne 12 et permet la fixation de celui-ci sur le carter 5. Le mouvement vers l'avant ou l'extérieur de la tige 22 libère un taquet et le poussoir 16 peut descendre et être verrouillé contre l'action de son ressort de rappel.

La Fig. 2 représente un appareil selon le deuxième mode de réalisation tel qu'il se présente pratiquement. Le carter et les moyens de sécurité sont inclus à l'intérieur d'un couvercle ou cache 27.

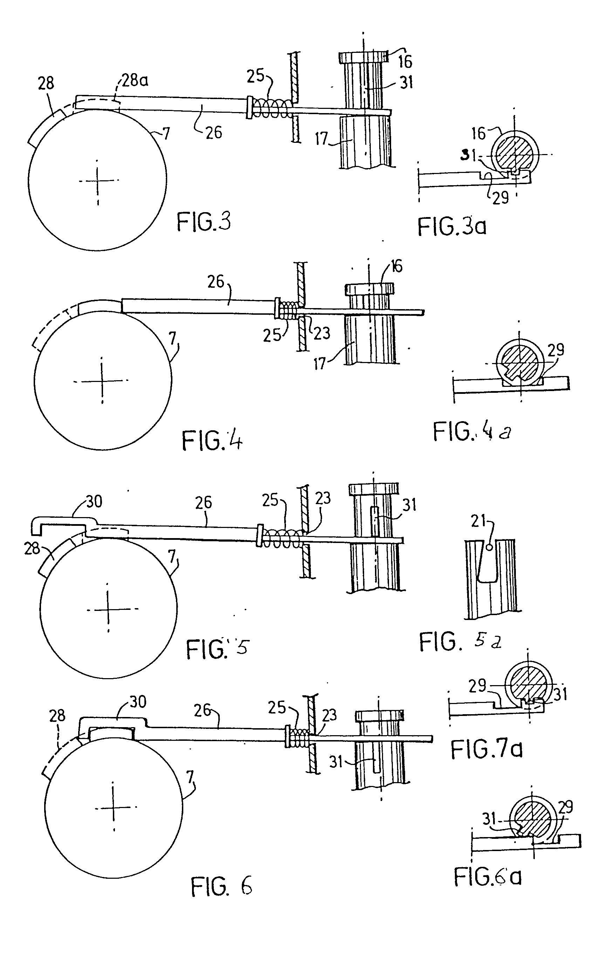

Les Figs 3, 3a et 4, 4a représentent respectivement en vue de face et en vue par dessus un premier mécanisme utilisable dans le second mode de réalisation, en position de repos et de verrouillage. Sur la Fig. 3, on retrouve le cylindre 7 et son bossage 28 qui actionne, le levier 26 armé par le ressort 25. Dans ce mode de réalisation le levier 26 présente à son extrémité avant (à droite sur les Figs 3 et 4) une encoche 29 (Fig. 3a) qui permet le passage de la nervure 31 formée le long d'une génératrice du poussoir 16. Lors du montage les éléments sont dans la position représentée sur la Fig. 3. Le poussoir 16 ne peut pas descendre puisqu'il est bloqué par le contact de l'extrémité inférieure de la nervure 31 sur le levier 26. Ce n'est que par un déplacement vers la droite que l'encoche 29 arrive au-dessous de la nervure 31 et permet la descente du poussoir 16 à l'intérieur de son guide 17. Or ce déplacement correspond à la poussée, par le bossage 28, de l'extrémité arrière du levier 26, c'est-à-dire au verrouillage du cylindre 7 sur le socle. Les éléments occupent alors la position représentée sur la Fig. 4 et le poussoir 16 est bloqué dans cette position par l'ensemble téton 21, baïonnette 20 montré sur la Fig. 4.

Toutefois, dans le mode de réalisation précédent, le démontage ou déverrouillage du cylindre par rotation n'entraîne pas l'arrêt automatique du moteur. Ce résultat peut être obtenu par le mécanisme représenté sur les Figs 5, 5a, 5b, 6 et 6a qui montrent celui-ci en position de repos (Fig. 5) et de travail (Fig. 6). Les éléments sont les mêmes que précédemment. Toutefois, dans le but d'assurer une bonne coopération entre le levier 26 et le bossage 28, le levier est terminé à son extrémité arrière par un étrier 30 qui peut venir entourer le bossage 28 de sorte que tout mouvement du bossage et, du cylindre, soit répercuté sur le levier, qu'il s'agisse d'un mouvement d'avance ou de recul. Dans ces conditions, le ressort 25 pourrait être supprimé sans inconvénient. Contrairement au mécanisme précédent, il n'existe plus de moyens de blocage du poussoir 16 dans le cylindre 7. Ce blocage n'est assuré que par contact de l'extrémité supérieure de la nervure 31 avec la face inférieure du levier 26. Le blocage en position de repos est analogue à celui des Figs 3 et 4, c'est-à-dire que c'est l'extrémité inférieure de la nervure 31 qui porte sur la face supérieure du levier 26 (Fig. 5a) alors que la situation inverse se produit en position de travail (Fig. 6a). Entre ces deux positions se produit le passage de la nervure 31 dans l'encoche 29 qui, de préférence est d'une largeur moindre que la précédente. Lorsque le cylindre 7 est déverrouillé par rotation, la tringle ou levier 26 se déplace vers la gauche et la nervure 31 arrive en face de l'encoche 29 à travers laquelle elle pénètre sous la poussée du ressort de rappel du poussoir (non représenté) qui tend à repousser le poussoir 16 vers le haut en absence de toute sollicitation. Ainsi, lorsque le cylindre 7 est déverrouillé, le moteur est arrêté automatiquement.

**Revendications**

1. Appareil pour l'extrusion de pâtes alimentaires destiné à être monté d'une manière amovible sur le socle (1) d'un robot de cuisine incluant à l'intérieur du socle un moteur électrique et un circuit d'alimentation du moteur, comprenant une vis sans fin (6) tournant à l'intérieur d'une cage cylindrique (7) horizontale dans laquelle débouche une trémie d'entrée de la pâte (15) terminée a l'extrémité opposée par une grille perforée d'extrusion (13), le circuit d'alimentation du moteur comprenant un interrupteur de sécurité actionné par le montage de la cage cylindrique (7), caractérisé en ce qu'il comprend une embase (4) s'adaptant d'une manière amovible sur le socle (1) et supportant le carter (5) contenant une pignonerie de renvoi et de réduction de vitesse, l'axe de la vis sans fin étant solidaire du pignon, un poussoir (16) coulissant verticalement au dessus d'un interrupteur (18) disposé à l'intérieur du socle et monté en série dans le circuit d'alimentation du moteur, coulissant dans une glissière (17) et coopérant avec un mécanisme de verrouillage (22, 25, 26) libérant le poussoir lorsque la cage cylindrique (7) est montée sur le carter (5).

2. Appareil selon la revendication 1, caractérisé en ce que le poussoir (16) est verrouillé en position haute, correspondant à l'ouverture de l'interrupteur (18), par une tige (22) solidaire d'une tringle (26), mobile latéralement, et dont la transmission est commandée par portée sur un bossage (28) solidaire de la cage cylindrique (7).

3. Appareil selon la revendication 2, caractérisé en ce que des ergots (21) portés par le poussoir (16) coopèrent avec des rainures à baïonnette (20) pour assurer le blocage du poussoir (16) en position basse, l'interrupteur (18) étant en position fermée.

4. Appareil selon la revendication 1, caractérisé en ce que le blocage du poussoir (16) en position haute est assuré par le contact de la partie inférieure d'une nervure longitudinale (21) du poussoir (16) sur la tringle (26), le blocage en position basse étant assuré par le contact de l'extrémité supérieure de la nervure (31) avec la face inférieure de la tringle (26), le poussoir étant rappelé vers le haut par un ressort.

**Patentansprüche**

1. Vorrichtung zum Auspressen von Teigwaren, die abnehmbar auf dem Sockel (1) einer im Innern des Sockels mit einem Elektromotor und einem Versorgungsstromkreis für den Motor versehenen Küchenmaschine montierbar ist, mit einer Schnecke (6), die in einem zylindrischen horizontalen Käfig (7) drehbar ist, der mit einem Eingabetrichter (15) für den Teig versehen und an seinem freien Ende mit einer perforierten Austrittsscheibe (13) abgeschlossen ist, sowie mit einem Sicherheitsunterbrecher für den Versorgungsstromkreis des Motors, der durch die Montage des zylindrischen Käfigs (7) ausgeschaltet wird, dadurch gekennzeichnet, dass ein Ansatz (4) vorgesehen ist, der auswechselbar an den Sockel (1) angepasst ist und der ein Gehäuse (5) trägt, das eine Getriebeanordnung zur Drehrichtungsumkehr und zur Drehzahlverringerung enthält, wobei die Achse der Schnecke fest mit einem Getrieberad verbunden ist, dass ein Drükker (16) vorgesehen ist, der im Innern des Sockels vorgesehen und in Serie zum Versorgungsstromkreis des Motors geschalteten Unterbrechers (18) verschiebbar ist, wobei der Drücker in einer Geradführung (17) verschiebbar ist und mit einem Verriegelungsmechanismus (22, 25, 26) zusammenwirkt, der den Drücker freigibt, wenn der zylindrische Käfig (7) am Gehäuse (5) angebracht ist.

2. Vorrichtung nach Anspruch 1, dadurch gekennzeichnet, dass der Drücker (16) in einer oberen, dem geöffneten Zustand des Unterbrechers (18) entsprechenden Position durch einen Schaft (22) verriegelt ist, der fest mit einer seitlich beweglichen Stange (26) verbunden ist und deren Bewegung durch die Führung an einem mit dem zylindrischen Käfig (7) verbundenen Nocken (28) gesteuert ist.

3. Vorrichtung nach Anspruch 2, dadurch gekennzeichnet, dass am Drücker (16) angebrachte Nasen (21) mit bajonettartigen Einschnitten (20) zusammenwirken, um die Verriegelung des Drükkers (16) in der unteren Position zu sichern, in der der Unterbrecher (18) im geschlossenen Zustand ist.

4. Vorrichtung nach Anspruch 1, dadurch gekennzeichnet, dass die Verriegelung des Drükkers (16) in seiner oberen Position durch die Auflage des unteren Teils einer Längsrippe (31) des Drückers (16) auf der Stange (26) gesichert ist, und dass die Verriegelung in der unteren Position durch die Auflage des oberen Endes der Rippe (31) auf der unteren Fläche der Stange (26) gesichert ist, wobei der Drücker durch eine Feder nach oben zurückgedrückt wird.

**Claims**

1. Apparatus for the extrusion of foodstuffs in paste form, adapted to be mounted detachably on the stand (1) of an automatic kitchen machine, including internally of the stand an electric motor and a supply circuit for the motor, comprising a worm (6) rotating within a horizontal cylindrical cage (7) into which a paste entry hopper (15) opens and which terminates at the opposite end in a perforated extrusion grating (13), the motor supply circuit comprising a safety switch actuated by the assembly of the cylindrical cage (7), characterised in that it comprises a base (4) fitting detachably on to the stand (1) and supporting the casing (5) containing a speed reduction and transmission pinion means, the shaft of the worm being fast with the pinion, a push member (16) sliding vertically above a switch (18) situated within the stand and connected in series in the motor supply circuit, sliding in a slideway (17) and co-operating with a locking mechanism (22, 25, 26) releasing the push member when the cylindrical cage (7) is assembled on the casing (5).

2. Apparatus according to claim 1, characterised in that the push member (16) is locked in the upper position, corresponding to the opening of the switch (18), by a rod (22) fast with an arm (26) which is mobile laterally, transmission of movement therefor being effected by bearing against a boss (28) integral with the cylindrical cage (7).

3. Apparatus according to claim 2, characterised in that studs (21) provided on the push member (16) cooperate with bayonet grooves (20) for effecting the locking of the push member (16) in the lower position, the switch (18) being in the closed position.

4. Apparatus according to claim 1, characterised in that the locking of the push member (16) in the upper position is effected by the contact of the lower portion of a longitudinal rib (21) of the push member (16) against the arm (26), locking in the lower position being effected by the upper end of the rib (21) contacting the lower face of the arm (26), the push member being returned in the upward direction by a spring.

FIG.1

FIG.2

FIG.3

FIG.3a

FIG.4

FIG.4a

FIG.5

FIG.5a

FIG.6

FIG.6a

FIG.7a